(19) Europäisches Patentamt / European Patent Office / Office européen des brevets

(11) **EP 3 657 078 B1**

(12) **EUROPEAN PATENT SPECIFICATION**

(45) Date of publication and mention
of the grant of the patent:
**02.11.2022 Bulletin 2022/44**

(21) Application number: **18207454.2**

(22) Date of filing: **21.11.2018**

(51) International Patent Classification (IPC):
**F24D 19/10** (2006.01)     **G01K 17/08** (2006.01)

(52) Cooperative Patent Classification (CPC):
**G01K 17/08; F24D 19/1048;** F28F 2200/00

(54) **METHOD OF MEASUREMENT OF POWER OUTPUT OF HEAT EXCHANGERS**

VERFAHREN ZUR MESSUNG DER AUSGANGSLEISTUNG VON WÄRMETAUSCHERN

PROCÉDÉ DE MESURE DE PUISSANCE DE SORTIE D'ÉCHANGEURS DE CHALEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.05.2020 Bulletin 2020/22**

(73) Proprietor: **CSEM
Centre Suisse d'Electronique et de
Microtechnique SA
2002 Neuchâtel (CH)**

(72) Inventors:
• **BOEGLI, Max
2072 St-Blaise (CH)**
• **CARRILLO RANGEL, Rafael
1020 Renens (CH)**
• **STAUFFER, Yves
1066 Epalinges (CH)**
• **HUTTER, Andreas
2000 Neuchâtel (CH)**

(74) Representative: **e-Patent SA
Rue Saint-Honoré 1
Case postale 2510
2001 Neuchâtel (CH)**

(56) References cited:
**EP-A1- 2 553 345     EP-A2- 0 065 201
US-B2- 9 046 274**

**Description**

**Technical Field**

The present invention relates to the technical field of heating systems. More particularly, it relates to a method of estimating thermal power output by individual heat exchangers in a heating system.

**State of the art**

In central heating systems where one heat source such as a boiler or similar heats several properties such as apartments situated in one building, it is important to be able to estimate the thermal power output and hence the heat consumption of each individual heat exchanger (such as a radiator) so as to be able to allocate the heat cost to each consumer. Although flat-rate allocation of heat consumption based on assumptions such as heated volume, floor area, number of heat exchangers and so on used to be common, it is rapidly going out of favour since it discourages energy efficiency by individual consumers since their excess consumption is divided up amongst all consumers using the same heating system.

Typically, the estimation of heat usage is carried out with so-called heat cost allocators (HCA's), which are measurement devices professionally soldered or glued onto radiators which measure the temperature of the radiator and the ambient temperature of the space in which the radiator is situated. On the basis of characteristic coefficients of the heat exchangers obtained by testing in a thermal chamber compliant with the standard EN 442, an estimate of the thermal power exchanged between the heat exchanger and the surrounding air can be estimated by the equation:

$$P^{rad} = Q_N \left( \frac{T_m - T_a}{50} \right)^n$$

where $P^{rad}$ is the thermal power exchanged by the heat exchanger, $T_m$ denotes the mean temperature of the working fluid inside the heat exchanger as measured by the HCA (which is placed at or near the middle of the heat exchanger for this reason), $T_a$ is the air temperature near the radiator as measured by the HCA, and $Q_N$ and n are characteristic coefficients of the radiator obtained in the prior controlled testing mentioned above. The multiplicative coefficient $Q_N$ is sometimes written as $Q_{N50}$, and corresponds to the nominal power exchange when $T_m - T_a = 50°C$.

On the basis of the measured power, the energy output of the heat exchanger can be estimated, and used to allocate heating costs between consumers.

However, since actual real-world installations of heat exchangers rarely correspond to the situation during testing, this can lead to very large errors. For instance, the testing protocols presume that the heat exchangers are mounted without obstruction. In reality, users may mount the heat exchangers in perforated wooden decorative boxes, behind curtains, sandwiched between furniture and a wall, or (semi)permanently covered in clothes, towels or similar. All of these suboptimal situations obstruct the HCA to a greater or lesser degree, and hence affect its readings.

Other methodologies are of course also known. For instance, DE3243198 describes a method in which the inlet and outlet working fluid temperatures of a heat exchanger are measured, and the volumetric flow is estimated based on a throttle state of an inlet valve. By multiplying the difference in inlet and outlet temperature by the estimated volumetric flow rate and the volume-specific heat capacity of the working fluid (which in the case of water is approximately 4.2 kJ.L$^{-1}$.K$^{-1}$), the thermal energy consumption can be measured.

Although measuring the outlet temperature eliminates the effect of the heat exchanger being covered or otherwise suboptimally sited since the true temperature drop of the working fluid across it can be determined, it does require an additional sensor on the outlet which must be professionally installed. Furthermore, estimating volumetric flow rate based on the state of the valve is only a first-order approximation and will depend heavily on the working pressure of the system. As the system ages, scale may build up significantly in the pipes leading to and from the heat exchanger, affecting the relationship between the state of the valve and the flow rate, introducing further errors. This method is not affected based on the siting of the heat exchanger, but does require that a difficult-to-install outlet temperature sensor be provided.

A more complex method is disclosed in EP2376884, which requires detailed knowledge of the pressure drops in the piping network of the system, or a detailed model thereof. This is not acceptable for cost and time reasons, and furthermore the method approximates the individual inlet fluid temperatures of the heat exchangers by the output fluid temperature of the heat source, which can be incorrect by up to several °C. US 9 046 274 B2 describes a control method for a domestic heating system, in which power output of individual radiators is adjusted using a thermocycling method, which monitors the heating of the individual rooms and the response to a change in supply flow over time.

The aim of the invention is hence to provide a method of measuring power output of individual heat exchangers in a heating system, which is exempt from the above-mentioned drawbacks of the prior art.

## Disclosure of the invention

More specifically, the invention relates to a method of estimating power output of heat exchangers in a heating system comprising a heat source such as a boiler, a solar-thermal collector, a ground or air source heat pump or similar arranged to heat a working fluid such as water and to circulate said working fluid through a plurality of heat exchangers such as radiators. This method comprises the steps of:

-   obtaining measurements of power output $P$ by said heat source at a plurality of predetermined times, e.g. by means of a heat meter;
-   obtaining measurements of inlet temperature $T^{in}$ of said working fluid at an inlet of at least some of said of heat exchangers, e.g. by means of a suitably-arranged temperature sensor which may for instance form part of a so-called smart thermostatic valve;
-   obtaining measurements of ambient temperature $T^{amb}$ of the surroundings of said heat exchangers (i.e. the ones for which $T^{in}$ is measured), e.g. by means of a temperature sensor arranged to sense the air temperature proximate to the heat exchanger, this sensor being located e.g. in a smart thermostatic valve, or otherwise located near to the heat exchanger such as in the same room;
-   calculating power $P^{rad}$ output by each individual heat exchanger for which $T^{in}$ and $T^{amb}$ are measured, according to the equation

$$P^{rad} = Q_N(F(T))^n$$

where $Q_N$ is a nominal power coefficient of said individual heat exchanger, $F(T)$ is a characteristic function of temperature based upon at least said inlet temperature $T^{in}$ and said ambient temperature $T^{amb}$ measured at said individual heat exchanger, and n is a characteristic coefficient of said individual heat exchanger.

During a training phase, said measurements of at least $T^{in}$ and $T^{amb}$ are obtained during a predetermined training period and at predetermined times (e.g. at 10 minute resolution for a number of days), said measurements being used to calculate said nominal power coefficient $Q_N$ for each heat individual exchanger by equating the sum of values of $P^{rad}$ for all of said heat exchangers with power P output by said heat source at corresponding times (which may be discrete times or averaged values covering the same period, e.g. averaged values over a day, a period such as 6 or 12 hours or any other convenient period) and determining the values of $Q_N$ for each individual heat exchanger. By expressing the above-mentioned equation as a matrix, the values of $Q_N$ for all heat exchangers can be calculated simultaneously. In the case in which not all heat exchangers in the system are metered for $T^{in}$ and $T^{amb}$, these can be taken into account either based on standard HCA measurements, or based on other assumptions when summing the individual heat exchanger power outputs when equating them with the power output of the heat source.
In an operating phase, said calculation of the power output $P^{rad}$ of each of said heat exchangers is carried out based on said measurements and the nominal power coefficients $Q_N$ determined in said training phase.
This two-phase method enables far more accurate values of $Q_N$ to be determined, eliminating reliance on the manufacturer's stated values and thus automatically taking into account suboptimal siting of the heat exchangers. As a result, the calculated values of heat exchanger power output $P^{rad}$ are more accurate, which has a positive knock-on incidence on other values calculated based thereupon, such as the heat energy used and its allocation to each consumer connected to a single heat source.
Advantageously, said characteristic function of at least said inlet temperature and said ambient temperature at each heat exchanger is a function of $T^{in} - T^{amb}$ such as $(T^{in} - T^{amb})/50$. This solution is particularly simple and only requires inlet and ambient temperature measurements, but nevertheless gives excellent results.
Advantageously, measurements of the outlet temperature $T^{out}$ of said working fluid the outlet of at least some of said heat exchangers (i.e. at least some of those for which $T^{in}$ and $T^{out}$ are measured) are obtained at said predetermined times, and wherein said characteristic function of temperature is a function of $0.5(T^{in} + T^{out}) - T^{amb}$, particularly $(0.5(T^{in} + T^{out}) - T^{amb})/50$. More accurate measurements are possible, since the average of the inlet and outlet temperatures gives approximately the average temperature of the heat exchanger and hence better results than using the inlet temperature, which is higher than the average temperature.
Advantageously, at least some of said heat exchangers are provided with a thermostatic valve at its inlet, said thermostatic valve being arranged to control the flow of said working fluid into said heat exchanger, and direct or indirect measurements of the position $V^{pos}$ of said valve being obtained at said predetermined times and being taken into account when calculating said power output $P^{rad}$.

Advantageously, during said training phase, said measurements are averaged over a predetermined time period such as a day or a time period such as 6 or 12 hours (or any other convenient period) and said values of $Q_N$ are calculated based on said average values.

Advantageously, said values of $Q_N$ are obtained simultaneously for all of said metered heat exchangers by linear regression.

Advantageously, said training phase is periodically carried out anew, which permits automatic compensation of changes in the situation of one or more of the heat exchangers, such as a piece of furniture being placed in front thereof.

Advantageously, said training phase is carried out anew on the basis of said measurements obtained in a preceding operating phase. This permits the values of $Q_N$ to be adapted periodically by treating a predetermined period of the operating phase as a (re-)training period running in parallel.

This method can be expressed as a series of instructions for causing a computing unit as mentioned below to carry out the various steps, this being stored on a non-volatile computer-readable medium as a computer program product.

The invention furthermore relates to a heating system comprising:

- a computing unit which may be local or remote to the system;
- a heat source arranged to heat a working fluid and to circulate said working fluid through a plurality of heat exchangers such as radiators e.g. by means of a pump;
- a heat meter arranged to obtain measurements of heating power P output by said heat source and to communicate said measurements to said computing unit;

  wherein at least some of said heat exchangers are associated with an inlet temperature sensor arranged to obtain measurements of inlet temperature $T^{in}$ of said working fluid at an inlet of said of heat exchanger and to communicate said measurements to said computing unit, these heat exchangers also being associated with an ambient temperature sensor arranged to obtain measurements of ambient temperature $T^{amb}$ of the surroundings of each respective heat exchanger and to communicate said measurements to said computing unit,
  and wherein said computing unit is arranged to receive said measurements, including any further optional measurements mentioned below, and to carry out the method as described above.

Advantageously, at least some of said heat exchangers (i.e. those provided with sensors for $T^{in}$ and $T^{amb}$ are also provided with an outlet temperature sensor arranged to obtain measurements of the outlet temperature $T^{out}$ of said working fluid the outlet of said heat exchanger and to communicate said measurements to said computing unit.

Advantageously, at least some of said heat exchangers are provided with a thermostatic valve at its respective inlet, said thermostatic valve being arranged to control the flow of said working fluid into said heat exchanger, wherein the system is arranged to obtain measurements of the position $V^{pos}$ of said valve and to communicate said measurements to said computing unit.

### Brief description of the drawings

Further details of the invention will appear more clearly upon reading the description below, in connection with the following figures which illustrate :

- Figure 1: a schematic representation of a heating system suitable for carrying out the method of the invention; and
- Figure 2: a schematic flowchart representation of the method of the invention.

### Embodiments of the invention

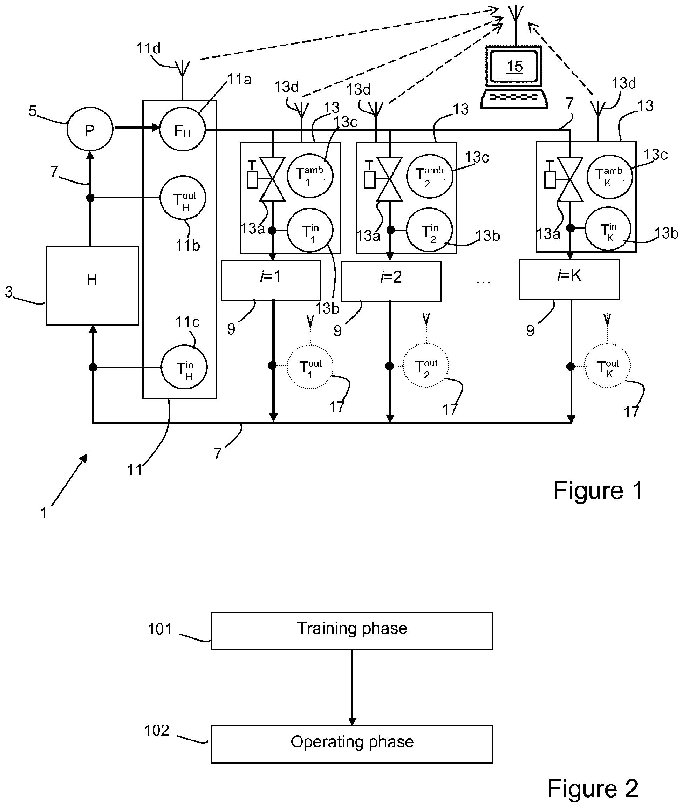

Figure 1 illustrates schematically a heating system 1 with which the method of the invention is carried out.

This heating system 1 comprises a heat source 3, which can be a boiler (electric, oil, gas, wood, biomass, ...), the thermal output of a heat pump (ground source, air source, ...), a solar thermal collector, a geothermal heat source or any other convenient type. Heat source 3 is arranged to heat a working fluid such as water, which is circulated in a network of conduits 7 illustrated as thick lines which lead to and from a plurality of heat exchangers 9 by means of a pump 5 arranged on either the outlet (hot) or the inlet (cold) side of the heat source 5. In the illustrated example, the pump 5 is situated on the outlet side thereof, as illustrated by the direction of the arrows on the conduits 7. As a result, the heat source 3, the pump 5 and the heat exchangers 9 are in fluidic communication by means of the conduits 7 and form a fluidic circuit.

In order to measure the heat produced by the heat source 3, a heat meter 11 is provided, which comprises a flow meter 11a arranged to measure the flow rate $F_H$ of the working fluid through the heat source 3 and as such may be situated on the inlet or outlet side thereof, as well as means for measuring the temperature difference of the working fluid at the heat source outlet compared to that at the heat source inlet. To this end, a heat source outlet temperature sensor 11b measures the temperature $T_H^{out}$ of the working fluid at the heat source output, and a heat source inlet temperature sensor 11c which measures the temperature $T_H^{in}$ of the working fluid returned from the heat exchangers 9. These elements may be integrated into a single unit, or may be two or three separate elements situated in an appropriate manner. The heat meter 11 comprises a processor (not illustrated) and a transponder 11d, illustrated schematically by means of an antenna symbol, so as to permit the heat meter 11 to communicate wirelessly or via a wired connection with a computing unit 15, this latter receiving the values of $F_H$, $T_H^{out}$ and $T_H^{in}$, or a function thereof. This computing unit 15 may be a general purpose or dedicated computer situated locally to the system 1, or may be e.g. a remote server communicating with the various sensors via the Internet or any other form or wired or wireless network.

By knowing the flow rate $F_H$ as well as $T_H^{out}$ and $T_H^{in}$, the instantaneous power production $P_H$ of the heat source can be calculated as:

$$P_H = F_H C (T_H^{out} - T_H^{in})$$

Where $F_H$, $T_H^{out}$ and $T_H^{in}$ are as described above, and C is the volume-specific heat capacity of the working fluid, which is approximately 4.2 kJ.L$^{-1}$.K$^{-1}$ for water.

By integrating $P_H$ with respect to time, the total thermal energy transferred by the heat exchanger can be calculated.

Heat exchangers 9 are typically radiators, but may also be other forms of heat exchangers. Three such heat exchangers 9 are illustrated, identified by the label i and labelled as *i* = 1, *i* = 2, ..., *i* = *K*, *K* being any number. These heat exchangers 9 may be situated one or more to a room, each consumer being responsible for one or more heat exchangers 9, i.e. those in his apartment, business unit or similar, with multiple apartments and/or business units being served by a single heat source 3, and between which the heating costs must be divided.

Each heat exchanger 9 is provided with a so-called "smart thermostatic valve" 13 at its inlet side, which serves to control the flow of working fluid into said inlet. Each smart thermostatic valve 13 comprises a valve 13a arranged to vary the flow rate of working fluid into the corresponding heat exchanger 9, an inlet temperature sensor 13b adapted to measure the temperature $T^{in}$ of the working fluid at said inlet, and an ambient temperature sensor 13c arranged to measure the temperature $T^{amb}$ of the ambient air surrounding the corresponding heat exchanger 9. The position of the valve 13a may be controlled conventionally, or may be actively driven by an appropriate actuator under the control of a processor (not illustrated). Each smart thermostatic valve 13 further comprises a transponder 13d, again illustrated schematically by means of an antenna symbol, adapted to communicate with the computing unit 15, typically wirelessly. However, it is also possible for the smart thermostatic valves 13 to communicate via a wired or fibre optic connection.

Such smart thermostatic valves are available off the shelf, and can even be installed relatively easily by a non-expert. They may also comprise a valve position sensor, outputting a state of openness $V^{pos}$ of the valve 13a (typically with zero representing the valve being closed and an arbitrary value representing its state of maximum openness), and may be arranged to adjust the temperature setting of the thermostatic valve 13a according to a schedule, in response to commands from a user (e.g. via a mobile app or other software package), and so on. In the case in which the valve 13a is actuated under control of the processor, the valve position may alternatively be inferred on the basis of the position commanded by the processor.

Alternatively, rather than a smart thermostatic valve, a conventional mechanical thermostatic valve may be paired with a separate inlet temperature sensor 13b and separate ambient temperature sensor 13c arranged to measure $T^{in}$ and $T^{amb}$ respectively, and to communicate as mentioned above. In such a case, $T^{amb}$ could be measured by the temperature sensor of a wall-mounted thermostat, or a dedicated ambient temperature sensor of any convenient type. In principle, valves 13a are not strictly necessary in the unusual case in which working fluid flows continuously into the corresponding heat exchanger without being thermostatically controlled. This situation can present itself in legacy heating systems.

Optionally, the outlet temperature $T^{out}$ of the working fluid can be measured at each heat exchanger 9 by means of a corresponding outlet temperature sensor 17 also arranged to communicate with the computing unit 15 directly or via the corresponding smart thermostatic valve 13.

Since the computing unit 15 receives at least the information mentioned above from the various sensors, the energy usage of each heat exchanger 9 can be determined according to the methodology described below.

Figure 2 illustrates schematically the two-phase methodology of the method of the invention, this method comprising a training phase 101 and a subsequent measurement phase 102.

The essence of the training phase is to determine the coefficient $Q_N$ for each heat exchanger, following an equation broadly of the general form

$$P^{rad} = Q_N (F(T))^n$$

where $P^{rad}$ is the thermal power emitted by a given heat exchanger 9, $F(T)$ is a characteristic function of temperature involving at least $T^{in}$ and $T^{amb}$, and optionally also $T^{out}$ if measured, $Q_N$ and $n$ are characteristic coefficients of the heat exchanger 9. Since $n$ is hardly affected by the situation of the heat exchanger 9, the manufacturer's stated value can be presumed to be correct, although $Q_N$ is frequently misleading for the reasons given above.

Hence, rather than rely on values of $Q_N$ provided by the manufacturer, the present invention allows this to be determined in situ, and hence automatically taking into account the siting of the heat exchangers, the geometry of the conduits 7 and so on.

These values are generated in the following manner.

As an input, at least the following signals are obtained at a plurality of times, such as every hour, every 10 minutes, every 5 minutes, every minute or at any other convenient frequency, for each heat exchanger $i = 1, ..., K$:

- Inlet fluid temperature measured at the corresponding smart valve of each heat exchanger $i$: $T_i^{in}(t)$, $t \in day,$
- Ambient temperature, i.e. the temperature of the surrounding air, measured at each corresponding smart valve 13 for each heat exchanger $i$: $T_i^{amb}(t)$, $t \in day.$

For a system 1 comprising $K$ heat exchangers 9 connected to the same heat source 3, the total thermal power produced by the heat source 3 is measured by means of the heat meter 11 for $M$ days. Let $P$ be an $M$-dimensional vector containing the daily average total thermal power of $M$ days produced by the heat source, let $\hat{Q}$ be a $K$-dimensional vector containing the nominal power coefficients ($Q_N$ or $Q_{N50}$ from the radiator datasheet taken as starting values the first time the method is run) for the $K$ heat exchangers 9, let $D$ be a $K \times K$ diagonal scaling matrix whose entries are defined as $D_{i,i} = 50^{-n_i}$ (with values for $n_i$ likewise e.g. taken from the corresponding datasheet) and let $G$ be a $M \times K$ matrix, $M > K$, where each entry is defined as

$$G_{j,i} = \left(T_{j,i}^{flow} - T_{j,i}^{amb}\right)^{n_i},$$

with $T_{j,i}^{flow}$ being a characteristic function of temperature denoting the daily average fluid temperature in heat exchanger $i$ at day $j$ and $T_{j,i}^{amb}$ denoting the daily average room temperature near radiator i at day j In the case in which only the inlet temperature is measured, $T_{j,i}^{flow} = T_{j,i}^{in}$, whereas if outlet temperature sensors 17 are present, $T_{j,i}^{flow} = \frac{T_{j,i}^{in} + T_{j,i}^{out}}{2}$. This latter equation calculates the average working fluid temperature in the heat exchanger 9 by averaging the input and output temperatures, and uses this for the value of $T^{flow}$. Other, shorter divisions of time are of course possible, in which case the value of $j$ identifies the corresponding time-slice.

The average daily power output hence follows the following linear model:

$$\begin{bmatrix} P_1 \\ \vdots \\ P_M \end{bmatrix} = \begin{bmatrix} \left(T_{1,1}^{flow} - T_{1,1}^{amb}\right)^{n_1} & \cdots & \left(T_{1,K}^{flow} - T_{1,K}^{amb}\right)^{n_K} \\ \vdots & \ddots & \vdots \\ \left(T_{M,1}^{flow} - T_{M,1}^{amb}\right)^{n_1} & \cdots & \left(T_{M,K}^{flow} - T_{M,K}^{amb}\right)^{n_K} \end{bmatrix} \begin{bmatrix} 50^{-n_1} & \cdots & 0 \\ \vdots & \ddots & \vdots \\ 0 & \cdots & 50^{-n_K} \end{bmatrix} \begin{bmatrix} \hat{Q}_1 \\ \vdots \\ \hat{Q}_K \end{bmatrix},$$

or simply $P = GD\hat{Q}$. The nominal power coefficients can be determined for each heat exchanger in situ by performing a linear regression and solving for the vector of coefficients $\hat{Q}$. In order to account for prior information on the coefficients, e.g. manufacturer's coefficients or coefficients computed in a previous time period, these nominal coefficients can be obtained by solving the following regularized least squares (LS) problem :

$$\min_{\widehat{Q}} \left[ \left\| P - GD\widehat{Q} \right\|_2^2 + \lambda \left\| \widehat{Q} - Q_0 \right\|_2^2 \right],$$

where $\left\| \cdot \right\|_2^2$ represents the squared L$^2$ norm for vectors. The vector $Q_0$ represents prior information available in respect of the nominal power coefficients, i.e. the values of $Q_N$ or $Q_{N50}$ and of n supplied by the manufacturer and serving as initial conditions, or previously-obtained values of $Q_N$ or $Q_{N50}$ determined in-situ. The term $\left\| P - GD\widehat{Q} \right\|_2^2$ in the optimization problem is least-squares term that measures the discrepancy between the linear model and the measured power $P$. The term $\lambda \left\| \widehat{Q} - Q_0 \right\|_2^2$ calculates the discrepancy between the estimated coefficients $Q$ and the prior information $Q_0$. The positive constant $\lambda$ is a regularization parameter that balances the influence of the prior information and the measured power data. The value of $\lambda$ is arbitrary, and can be adapted to the particular situation, e.g. larger values of $\lambda$ give more trust to the prior information $Q_0$ and smaller values of $\lambda$ give more trust to the power data.

The coefficients of the matrix $Q$ thereby obtained are used in the operating phase 102 in order to estimate the energy exchanged by heat exchanger 9 in the system 1.

The duration of the training phase 101 should ideally be at least a number of days greater than the number of heat exchangers 9 in the system 1, i.e. $M > K$. If $K$ is large, rather than using a resolution of a day, a finer time resolution of e.g. 12 or 6 hour periods can be used, such that the training period can be reduced to a period greater than or equal to K multiplied by the time resolution in hours.

It should be noted that although the manufacturer's values of n are acceptable, this value may also be determined in situ by a similar method, applied mutatis mutandis.

In the operating phase 102, the coefficients $Q$ obtained during the training phase 101 are used to calculate the instantaneous power for each heat exchanger as follows.

In the simplest example, only $T^{in}$ and $T^{amb}$ are measured for each heat exchanger 9. In this case, during the training phase 101, $T_{j,i}^{flow} = T_{j,i}^{in}$ was used as mentioned above.

The instantaneous power output $P_i^{rad}(t)$ is hence given as:

$$P_i^{rad}(t) = \widehat{Q}_i \left( \frac{T_i^{in}(t) - T_i^{amb}(t)}{50} \right)^{n_i}$$

Integrating $P_i^{rad}(t)$ over a time period of interest, typically a day, for each heat exchanger 9, the thermal energy $E_i^{rad}$ exchanged by each heat exchanger 9 can be calculated. For discrete time slices $\Delta t$, this can be calculated as follows:

$$E_i^{rad} = \sum_{t \in day} P_i^{rad}(t)\Delta t.$$

The heating cost can then be allocated in proportion to the values of $E_i^{rad}$ calculated for each heat exchanger. The difference in total energy measured by this method for the sum of all heat exchangers 9 and that measured by the heat meter 11 represents the transport heat losses in the conduits 7, which can be allocated in proportion to heat consumption by the heat exchangers 9.

In the case in which the system 1 also comprises one or more heat cost allocator equipped heat exchangers 9, the heat consumption of these can be calculated and allocated in the normal fashion and deducted from the total thermal power produced by the heat source 3, the rest being allocated on the basis of the above calculation.

In the case in which the system 1 also comprises one or more unmetered heat exchangers 9, these can either be treated as transport losses, which may be appropriate in the case in which they are situated in communal areas, or may be estimated arbitrarily and deducted from the total thermal power produced by the heat source 3 prior to allocation.

Once the values of the coefficients in the matrix $Q$ have been calculated, they can be retroactively applied to the data obtained during the training phase 101 so as to calculate the energy output by each heat exchanger 9 during this period, and to allocate the associated costs on that basis.

These considerations also apply for each of the further situations described below.

In the case in which the smart valves 13 comprise a measurement of the position of the thermostatic valve $V_{pos}$, this can be taken into account for each heat exchanger $i$ by incorporating this into the equation as follows:

$$P_i^{rad}(t) = \widehat{Q}_i \left( \frac{T_i^{in}(t) - T_i^{amb}(t)}{50} \right)^{n_i} f(V_i^{pos}(t))$$

where:

$$f\left(V_i^{pos}(t)\right) = \frac{V_i^{pos}(t)}{V_{total}^{pos}(t)}$$

and

$$V_{total}^{pos}(t) = \sum_{i=1}^{K} V_i^{pos}(t),$$

i.e. $V_{total}^{pos}(t)$ is the sum of all valve positions for all heat exchangers $i$ at time $t$.

In the case in which the heat exchangers 9 are equipped with outlet temperature sensors 17, during the training phase 101 the relation $T_{j,i}^{flow} = \frac{T_{j,i}^{in} + T_{j,i}^{out}}{2}$ is used as discussed above. In the measurement phase 102, the calculated instantaneous power $P_i^{rad}(t)$ for each heat exchanger $i$ is given by:

$$P_i^{rad}(t) = \widehat{Q}_i \left( \frac{0.5\left(T_i^{in}(t) + T_i^{out}(t)\right) - T_i^{amb}(t)}{50} \right)^{n_i}$$

This equation bases the calculation of power on the average of the inlet $T^{in}$ and outlet $T^{out}$ temperatures for each heat exchanger 9 rather than simply on the inlet temperature.

Finally, in the case in which the previous example is expanded by means of the provision of a measurement of the valve state $V^{pos}$, the instantaneous power for each heat exchanger $i$ is given by:

$$P_i^{rad}(t) = \widehat{Q}_i \left( \frac{0.5\left(T_i^{in}(t) + T_i^{out}(t)\right) - T_i^{amb}(t)}{50} \right)^{n_i} f(V_i^{pos}(t))$$

where $f(V_i^{pos}(t))$ is defined as above.

It should be noted that the coefficients $Q$ (that is to say the matrix of $Q_N$ values for all heat exchangers 9) can be updated on a regular basis, e.g. every heating season or every month, by running the training phase 101 again either starting afresh from the manufacturer's coefficients or from the coefficients currently being used. Also, once the system 1 is running in the operating phase 102, the data gathered therein during a sufficiently long period may also be used to carry out a parallel (re-)training phase and thereby to update the coefficients. In other words, the operating phase 102 may be broken down into time slices, an earlier time slice of the operating phase 102 acting as a re-training phase for the next slice of operating phase 102.

The method of the invention was tested by means of a system as illustrated in figure 1, comprising six radiators acting as heat exchangers 9, with measurements of $T^{in}$, $T^{amb}$, $T^{out}$, and $V^{pos}$ being taken at 10 minute intervals. These radiators were also equipped with standard heat cost allocators in order to make a valid comparison. The metrics chosen were the deviation of the sum of the measurements of $E^{rad}$ for all the radiators from the energy measured by the heat meter 11, expressed as normalised mean bias error (NMBE), standard deviation (SD) and normalised mean absolute error (NMAE). The results were as follows:

| Parameters used | NMBE (%) | SD (%) | NMAE (%) |
|---|---|---|---|
| Heat cost allocator output | 3.2% | 8% | 6.7% |
| $T^{in}$, $T^{amb}$ | -2.9% | 8% | 6.1% |
| $T^{in}$, $T^{amb}$, $V^{pos}$ | -0.7% | 10% | 8.7% |
| $T^{in}$, $T^{amb}$, $T^{out}$ | -3.1% | 7% | 5.6% |
| $T^{in}$, $T^{amb}$, $T^{out}$, $V^{pos}$ | -2.4% | 14% | 11.6% |

As can be seen from the foregoing table, the method of the invention performs substantially the same as with the conventional heat cost allocators, and the best results were obtained without taking into account the valve position $V^{pos}$.

Finally, the method of the invention can be expressed as a computer program stored on a non-volatile computer storage medium (hard drive, CD-ROM, DVD-ROM, flash drive or similar) as a computer program product according to claim 9.

Although the invention has been described with respect to specific embodiments, variations thereto are possible without departing from the scope of the appended claims.

## Claims

1. Method of estimating power output of heat exchangers (9) in a heating system (1) comprising a heat source (3) arranged to heat a working fluid and to circulate said working fluid through a plurality of heat exchangers (9), said method comprising the steps of, at a plurality of predetermined times:

   - obtaining measurements of heating power $P$ output by said heat source (3);
   - obtaining measurements of inlet temperature $T^{in}$ of said working fluid at an inlet of at least some of said of heat exchangers (9);
   - obtaining measurements of ambient temperature $T^{amb}$ of the surroundings of said heat exchangers (9);
   - calculating power $P^{rad}$ output by each of said heat exchangers (9) individually, according to the equation

$$P^{rad} = Q_N(F(T))^n$$

   where $Q_N$ is a nominal power coefficient of said individual heat exchanger (9), $F(T)$ is a characteristic function of temperature based upon at least said inlet temperature $T^{in}$ and said ambient temperature $T^{amb}$ measured at said individual heat exchanger (9), and n is a characteristic coefficient of said individual heat exchanger (9),
   wherein, during a training phase, said measurements are obtained during a predetermined training period and at predetermined times, said measurements being used to calculate said nominal power coefficient $Q_N$ for each heat individual exchanger (9) by equating the sum of values of $P^{rad}$ for all of said heat exchangers (9) with power $P$ output by said heat source at corresponding times and determining the values of $Q_N$ for each individual heat exchanger (9),
   and wherein, in an operating phase, said calculation of the power output $P^{rad}$ of each of said individual heat exchanger (9) is carried out based on said measurements and the nominal power coefficients $Q_N$ determined in said training phase.

2. Method according to the preceding claim, wherein said characteristic function of at least said inlet temperature and said ambient temperature at each heat exchanger (9) is a function of $T^{in}$ - $T^{amb}$.

3. Method according to claim 1, wherein measurements of the outlet temperature $T^{out}$ of said working fluid at the outlet of at least some of said heat exchangers are obtained at said predetermined times, and wherein said characteristic function of temperature is a function of $0.5(T^{in} + T^{out})$ - $T^{amb}$.

4. Method according to any preceding claim, wherein at least some of said heat exchangers (9) are provided with a thermostatic valve (13a) at its inlet, said thermostatic valve (13a) being arranged to control the flow of said working fluid into said heat exchanger, and measurements of the position $V^{pos}$ of said valve (13a) being obtained at said predetermined times and being taken into account when calculating said power output $P^{rad}$.

5. Method according to any preceding claim, wherein, during said training phase, said measurements are averaged over a predetermined time period and said values of $Q_N$ are calculated based on said average values.

6. Method according to any preceding claim, wherein said values of $Q_N$ are obtained simultaneously by linear regression for all of said heat exchangers (9) for which measurements are taken.

7. Method according to any preceding claim, wherein said training phase is periodically carried out anew.

8. Method according to the preceding claim, wherein said training phase is carried out anew on the basis of said measurements obtained in a preceding operating phase.

9. Computer program product comprising instructions which, when the program is executed by the computing unit (15) of claim 10, cause the computing unit (15) to carry out the method of any of claims 1-8.

10. Heating system (1) comprising:

   - a computing unit (15);
   - a heat source (3) arranged to heat a working fluid and to circulate said working fluid through a plurality of heat exchangers (9);
   - a heat meter (11) arranged to obtain measurements of heating power $P$ output by said heat source (3) and to communicate said measurements to said computing unit (15);

   wherein at least some of said heat exchangers (9) are associated with an inlet temperature sensor (13b) arranged to obtain measurements of inlet temperature $T^{in}$ of said working fluid at an inlet of said of heat exchanger (9) and to communicate said measurements to said computing unit (15), said heat exchangers (9) also being associated with an ambient temperature sensor (13c) arranged to obtain measurements of ambient temperature $T^{amb}$ of the surroundings of each respective heat exchanger (9) and to communicate said measurements to said computing unit (15),
   and wherein said computing unit (15) is arranged to receive said measurements and to carry out the method of any of claims 1-8.

11. Heating system (1) according to the preceding claim, wherein at least some of said heat exchangers (9) are also provided with an outlet temperature sensor (17) arranged to obtain measurements of the outlet temperature $T^{out}$ of said working fluid the outlet of said respective heat exchanger (9) and to communicate said measurements to said computing unit (15).

12. Heating system (1) according to one of claims 10 or 11, wherein at least some of said heat exchangers are also provided with a thermostatic valve (13a) at its respective inlet, said thermostatic valve (13a) being arranged to control the flow of said working fluid into said heat exchanger (9), wherein the system (1) is arranged to obtain measurements of the position $V^{pos}$ of said valve (13a) and to communicate said measurements to said computing unit (15).

**Patentansprüche**

1. Verfahren zum Abschätzen der Ausgangsleistung von Wärmetauschern (9) in einem Heizsystem (1), das eine Wärmequelle (3) umfasst, die so angeordnet ist, dass sie ein Arbeitsfluid erwärmt und das Arbeitsfluid durch eine Vielzahl von Wärmetauschern (9) zirkuliert, wobei das Verfahren zu einer Vielzahl von vorbestimmten Zeiten die folgenden Schritte umfasst:

- Erhalten von Messungen der von der Wärmequelle (3) ausgegebenen Heizleistung $P$;
- Erhalten von Messungen der Einlasstemperatur $T^{in}$ des Arbeitsfluids an einem Einlass von mindestens einigen der Wärmetauscher (9);
- Erhalten von Messungen der Umgebungstemperatur $T^{amb}$ der Umgebung der Wärmetauscher (9);
- Berechnen der von jedem der Wärmetauscher (9) individuell abgegebenen Leistung $P^{rad}$ nach der folgenden Gleichung

$$P^{rad} = Q_N(F(T))^n$$

wobei $Q_N$ ein Nennleistungskoeffizient des individuellen Wärmetauschers (9) ist, $F(T)$ eine charakteristische Funktion der Temperatur ist, die auf mindestens der Einlasstemperatur $T^{in}$ und der Umgebungstemperatur $T^{amb}$ gemessen an dem individuellen Wärmetauscher (9) basiert, und $n$ ein charakteristischer Koeffizient des genannten individuellen Wärmetauschers (9) ist, wobei während einer Trainingsphase die Messungen während einer vorbestimmten Trainingsperiode und zu vorbestimmten Zeiten erhalten werden, wobei die Messungen verwendet werden, um den Nennleistungskoeffizienten $Q_N$ für jeden individuellen Wärmetauscher (9) durch Gleichsetzen der Summe der Werte von $P^{rad}$ für alle diese Wärmetauscher (9) mit der von der Wärmequelle zu den entsprechenden Zeiten abgegebenen Leistung $P$ zu berechnen und die Werte von $Q_N$ für jeden einzelnen Wärmetauscher (9) zu bestimmen, und wobei in einer Betriebsphase die Berechnung der Ausgangsleistung $P^{rad}$ jedes individuellen Wärmetauschers (9) auf der Grundlage der Messungen und der in der Trainingsphase bestimmten Nennleistungskoeffizienten $Q_N$ ausgeführt wird.

2. Verfahren gemäß dem vorhergehenden Anspruch, wobei die charakteristische Funktion von mindestens der Einlasstemperatur und der Umgebungstemperatur an jedem Wärmetauscher (9) eine Funktion von $T^{in}$ - $T^{amb}$ ist.

3. Verfahren gemäß Anspruch 1, wobei Messungen der Auslasstemperatur $T^{out}$ des Arbeitsfluids am Auslass von zumindest einigen der Wärmetauscher zu den vorbestimmten Zeiten erhalten werden, und wobei die charakteristische Funktion der Temperatur eine Funktion von $0.5(T^{in} + T^{out})$ - $T^{amb}$ ist.

4. Verfahren gemäß einem der vorhergehenden Ansprüche, wobei zumindest einige der Wärmetauscher (9) mit einem Thermostatventil (13a) an ihrem Einlass versehen sind, wobei das Thermostatventil (13a) so angeordnet ist, dass es den Fluss des Arbeitsfluids in den Wärmetauscher steuert, und Messungen der Position $V^{pos}$ des Ventils (13a) zu den vorbestimmten Zeiten erhalten werden und bei der Berechnung der Ausgangsleistung $P^{rad}$ berücksichtigt werden.

5. Verfahren gemäß einem der vorhergehenden Ansprüche, wobei während der Trainingsphase die Messungen über einen vorbestimmten Zeitraum gemittelt werden und die Werte von $Q_N$ auf der Grundlage dieser Durchschnittswerte berechnet werden.

6. Verfahren gemäß einem der vorhergehenden Ansprüche, wobei die Werte von $Q_N$ gleichzeitig durch lineare Regression für alle Wärmetauscher (9) erhalten werden, für welche Messungen vorgenommen werden.

7. Verfahren gemäß einem der vorhergehenden Ansprüche, wobei die Trainingsphase periodisch erneut durchgeführt wird.

8. Verfahren gemäß dem vorhergehenden Anspruch, wobei die Trainingsphase auf der Grundlage der in einer vorangegangenen Betriebsphase erhaltenen Messungen erneut durchgeführt wird.

9. Computerprogrammprodukt, das Anweisungen enthält, die, wenn das Programm von der Recheneinheit (15) nach Anspruch 10 ausgeführt wird, die Recheneinheit (15) veranlassen, das Verfahren nach einem der Ansprüche 1-8 auszuführen.

10. Heizsystem (1), umfassend:

- eine Recheneinheit (15);
- eine Wärmequelle (3), die so angeordnet ist, dass sie ein Arbeitsfluid erwärmt und das Arbeitsfluid durch eine Vielzahl von Wärmetauschern (9) zirkulieren lässt;
- einen Wärmemengenzähler (11), der angeordnet ist, um Messungen der von der Wärmequelle (3) abgegebenen Heizleistung $P$ zu erhalten und diese Messungen an die Recheneinheit (15) zu übermitteln;

wobei zumindest einige der Wärmetauscher (9) mit einem Einlasstemperatursensor (13b) verbunden sind, der angeordnet ist, um Messungen der Einlasstemperatur $T^{in}$ des Arbeitsfluids an einem Einlass des Wärmetauschers (9) zu erhalten und die Messungen an die Recheneinheit (15) zu übermitteln, wobei die Wärmetauscher (9) auch mit einem Umgebungstemperatursensor (13c) verbunden sind, der angeordnet ist, um Messungen der Umgebungstemperatur $T^{amb}$ der Umgebung jedes entsprechenden Wärmetauschers (9) zu erhalten und diese Messungen an die Recheneinheit (15) zu übermitteln, und wobei die Recheneinheit (15) so angeordnet ist, dass sie die Messungen empfängt und das Verfahren nach einem der Ansprüche 1-8 ausführt.

11. Heizsystem (1) gemäß dem vorhergehenden Anspruch, wobei zumindest einige der Wärmetauscher (9) auch mit einem Auslasstemperatursensor (17) versehen sind, der angeordnet ist, um Messungen der Auslasstemperatur $T^{out}$ des Arbeitsfluids am Auslass des entsprechenden Wärmetauschers (9) zu erhalten und diese Messungen an die Recheneinheit (15) zu übermitteln.

12. Heizsystem (1) gemäß einem der Ansprüche 10 oder 11, wobei zumindest einige der Wärmetauscher auch mit einem Thermostatventil (13a) an ihrem jeweiligen Einlass versehen sind, wobei das Thermostatventil (13a) so angeordnet ist, dass es den Fluss des Arbeitsfluids in den Wärmetauscher (9) steuert, wobei das System (1) angeordnet ist, um Messungen der Position $V^{pos}$ des Ventils (13a) zu erhalten und diese Messungen an die Recheneinheit (15) zu übermitteln.

## Revendications

1. Procédé d'estimation de la puissance de sortie d'échangeurs de chaleur (9) dans un système de chauffage (1) comprenant une source de chaleur (3) agencée pour chauffer un fluide de travail et pour faire circuler ledit fluide de travail à travers une pluralité d'échangeurs de chaleur (9), ledit procédé comprenant les étapes consistant à, à une pluralité de moments prédéterminés :

- obtenir des mesures de la puissance de chauffage $P$ délivrée par ladite source de chaleur (3) ;
- obtenir des mesures de la température d'entrée $T^{in}$ dudit fluide de travail à une entrée d'au moins certains desdits échangeurs de chaleur (9) ;
- obtenir des mesures de la température ambiante $T^{amb}$ de l'environnement desdits échangeurs de chaleur (9) ;
- calculer la puissance $P^{rad}$ produite par chacun desdits échangeurs de chaleur (9) individuellement, selon l'équation suivante

$$P^{rad} = Q_N(F(T))^n$$

où $Q_N$ est un coefficient de puissance nominale dudit échangeur de chaleur individuel (9), $F(T)$ est une fonction caractéristique de la température basée sur au moins ladite température d'entrée $T^{in}$ et ladite température ambiante $T^{amb}$ mesurées au niveau dudit échangeur de chaleur individuel (9), et $n$ est un coefficient caractéristique dudit échangeur de chaleur individuel (9),

dans lequel, pendant une phase d'apprentissage, lesdites mesures sont obtenues pendant une période d'apprentissage prédéterminée et à des moments prédéterminés, lesdites mesures étant utilisées pour calculer ledit coefficient de puissance nominale $Q_N$ pour chaque échangeur de chaleur individuel (9) en égalisant la somme des valeurs de $P^{rad}$ pour tous lesdits échangeurs de chaleur (9) avec la puissance $P$ délivrée par ladite source de chaleur à des moments correspondants et en déterminant les valeurs de $Q_N$ pour chaque échangeur de chaleur individuel (9),

et dans lequel, dans une phase de fonctionnement, ledit calcul de la puissance de sortie $P^{rad}$ de chacun desdits échangeurs de chaleur individuels (9) est effectué sur la base desdites mesures et des coefficients de puissance nominale $Q_N$ déterminés dans ladite phase d'apprentissage.

**2.** Procédé selon la revendication précédente, dans lequel ladite fonction caractéristique d'au moins ladite température d'entrée et ladite température ambiante au niveau de chaque échangeur de chaleur (9) est une fonction de $T^{in}$ - $T^{amb}$.

**3.** Procédé selon la revendication 1, dans lequel des mesures de la température de sortie $T^{out}$ dudit fluide de travail au niveau de la sortie d'au moins certains desdits échangeurs de chaleur sont obtenues auxdits moments prédéterminés, et dans lequel ladite fonction caractéristique de la température est une fonction de **0.5($T^{in}$ + $T^{out}$) - $T^{amb}$.**

**4.** Procédé selon l'une quelconque des revendications précédentes, dans lequel au moins certains desdits échangeurs de chaleur (9) sont munis d'une vanne thermostatique (13a) à leur entrée, ladite vanne thermostatique (13a) étant agencée pour commander le débit dudit fluide de travail dans ledit échangeur de chaleur, et des mesures de la position $V^{pos}$ de ladite vanne (13a) étant obtenues auxdits moments prédéterminés et étant prises en compte lors du calcul de ladite puissance de sortie $P^{rad}$.

**5.** Procédé selon l'une quelconque des revendications précédentes, dans lequel, au cours de ladite phase d'apprentissage, lesdites mesures sont moyennées sur une période de temps prédéterminée et lesdites valeurs de $Q_N$ sont calculées sur la base desdites valeurs moyennes.

**6.** Procédé selon l'une quelconque des revendications précédentes, dans lequel lesdites valeurs de $Q_N$ sont obtenues simultanément par régression linéaire pour tous lesdits échangeurs de chaleur (9) pour lesquels des mesures sont prises.

**7.** Procédé selon l'une quelconque des revendications précédentes, dans lequel ladite phase d'apprentissage est exécutée à nouveau périodiquement.

**8.** Procédé selon la revendication précédente, dans lequel ladite phase d'apprentissage est exécutée à nouveau sur la base desdites mesures obtenues dans une phase de fonctionnement précédente.

**9.** Produit de programme d'ordinateur comprenant des instructions qui, lorsque le programme est exécuté par l'unité de calcul (15) de la revendication 10, amènent l'unité de calcul (15) à exécuter le procédé de l'une quelconque des revendications 1 à 8.

**10.** Système de chauffage (1) comprenant :

- une unité de calcul (15) ;
- une source de chaleur (3) agencée pour chauffer un fluide de travail et pour faire circuler ledit fluide de travail à travers une pluralité d'échangeurs de chaleur (9) ;
- un compteur de chaleur (11) agencé pour obtenir des mesures de la puissance de chauffage $P$ délivrée par ladite source de chaleur (3) et pour communiquer lesdites mesures à ladite unité de calcul (15) ;

dans lequel au moins certains desdits échangeurs de chaleur (9) sont associés à un capteur de température d'entrée (13b) agencé pour obtenir des mesures de la température d'entrée $T^{in}$ dudit fluide de travail à une entrée dudit échangeur de chaleur (9) et pour communiquer lesdites mesures à ladite unité de calcul (15), lesdits échangeurs de chaleur (9) étant également associés à un capteur de température ambiante (13c) agencé pour obtenir des mesures de la température ambiante $T^{amb}$ de l'environnement de chaque échangeur de chaleur respectif (9) et pour communiquer lesdites mesures à ladite unité de calcul (15), et dans lequel ladite unité de calcul (15) est agencée pour recevoir lesdites mesures et pour mettre en œuvre le procédé de l'une quelconque des revendications 1 à 8.

**11.** Système de chauffage (1) selon la revendication précédente, dans lequel au moins certains desdits échangeurs de chaleur (9) sont également pourvus d'un capteur de température de sortie (17) agencé pour obtenir des mesures de la température de sortie $T^{out}$ dudit fluide de travail à la sortie dudit échangeur de chaleur respectif (9) et pour communiquer lesdites mesures à ladite unité de calcul (15).

**12.** Système de chauffage (1) selon l'une des revendications 10 ou 11, dans lequel au moins certains desdits échangeurs de chaleur sont également munis d'une vanne thermostatique (13a) au niveau de leur entrée respective, ladite vanne thermostatique (13a) étant agencée pour commander le débit dudit fluide de travail dans ledit échangeur de chaleur (9), dans lequel le système (1) est agencé pour obtenir des mesures de la position $V^{pos}$ de ladite vanne (13a) et pour communiquer lesdites mesures à ladite unité de calcul (15).

Figure 1

Figure 2

**REFERENCES CITED IN THE DESCRIPTION**

**Patent documents cited in the description**

- DE 3243198
- EP 2376884 A
- US 9046274 B2